(19) Europäisches Patentamt
European Patent Office
Office européen des brevets

(11) **EP 3 099 516 B1**

(12) **EUROPEAN PATENT SPECIFICATION**

(45) Date of publication and mention
of the grant of the patent:
**04.09.2019 Bulletin 2019/36**

(51) Int Cl.:
***B60C 11/12*** *(2006.01)*    ***B60C 11/11*** *(2006.01)*
***B60C 11/13*** *(2006.01)*

(21) Application number: **15703514.8**

(22) Date of filing: **28.01.2015**

(86) International application number:
**PCT/EP2015/051670**

(87) International publication number:
**WO 2015/113992 (06.08.2015 Gazette 2015/31)**

(54) **TREAD BAND COMPRISING BLOCKS WITH LAYERS OF COVERING MATERIAL ON THEIR LATERAL SURFACES**

LAUFFLÄCHE MIT BLÖCKEN DEREN SEITENFLÄCHEN MIT EINEM ABDECKUNGSMATERIAL BESCHICHTET SIND

STRUCTURE DE BANDE DE ROULEMENT COMPORTANT DES BLOCS DONT LES FACES LATERALES SONT CONSTITUÉES DE COUCHES DE MATÉRIAU DE REVÊTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.01.2014 FR 1450723**

(43) Date of publication of application:
**07.12.2016 Bulletin 2016/49**

(73) Proprietor: **Compagnie Générale des Etablissements Michelin**
**63000 Clermont-Ferrand (FR)**

(72) Inventor: **KANEKO, Shuichi**
**Tokyo 163-1073 (JP)**

(74) Representative: **Regimbeau**
**20, rue de Chazelles**
**75847 Paris Cedex 17 (FR)**

(56) References cited:
**WO-A1-2013/092688    WO-A1-2013/092846**
**JP-A- 2005 193 770**

## Description

FIELD OF THE INVENTION

The present invention relates to a pneumatic tyre suitable for ice-bound or snow covered roads, and more particularly to a pneumatic tyre for ice-bound or snow covered roads, in which the tread band of the pneumatic tyre comprises a plurality of blocks.

PRIOR ART

To improve the grip of a tyre for winter travel, known as a snow tyre, on snow-covered ground, it is known to use in the tread a rubber-like material having a low modulus of elasticity. Thus, the overall stiffness of the blocks forming said tread is thus reduced.
The document JP 2009-078654 discloses a pneumatic tyre comprising a tread band having some blocks. Each block comprises a main sipe extending along a circumferential direction and a plurality of secondary sipes perpendicular to the main sipe. Using such main sipe and secondary sipes make decrease the stiffness of the block and improve the speed acceleration performance and braking performance on ice.
The document WO2013/092846A1 discloses a moulding element for moulding a tire comprising a main cutting means and two secondary cutting means extending from the main cutting means. The document JP2005-193770A discloses a block comprising a sipe having an expanded portion in the depth of the block. The document WO2013/092688A1 discloses a block comprising at least one lateral face being covered by a layer of covering material over at least 50% of the surface thereof and a part which is not covered by the covering material, the covering material having a modulus of elasticity which is greater than a modulus of elasticity of the rubber-like material forming the block.
It is also well know that if the stiffness of a block is too low, the wear of this block can increase dramatically.
It is an object of the present invention to improve the grip of a snow tyre on snow-covered ground and ice-covered ground and in the same time maintaining the durability of this tyre.

DEFINITIONS

"Tyre" is understood as any type of elastic tyre whether it is subjected to an internal pressure or not.
"Tread" of a tyre is understood as a quantity of rubber material defined by lateral surfaces and by two principal surfaces, one thereof being designed to come into contact with a road surface when the tyre is travelling.
"Block" is understood as relief element limited by some grooves. Each block comprises a plurality of lateral faces and a contact face which is able to come into contact with the road when the tyre is rolling.

"Groove" is understood as a cut-out, the faces limiting the groove not coming into contact in normal travelling conditions. Generally, the width of a groove is greater than or equal to 2 mm.
"Sipe" is understood as a cut-out, the faces delimiting the sipe coming into contact during normal travelling conditions. Generally, the width of a sipe is less than 2 mm.
"Modulus of elasticity" of an elastic material is understood as the relationship between the variation in stress and the variation in deformation when said material is subjected to tractive or compressive forces.
"Circumferential direction" is understood as a direction which is tangential to any circle centred on the axis of rotation. Said direction is perpendicular both to an axial direction and to a radial direction.

SUMMARY OF THE INVENTION

The invention relates to a tread band made of rubber-like material for a tyre. The tread band comprises a plurality of block, each block having a contact face designed to come into contact with the ground when the tyre travels and a plurality of lateral faces. Each block comprises a main sipe extending along a main direction. Each block comprises a plurality of secondary sipes perpendicular to the main sipe. Each lateral face of the block is covered by a layer of covering material over at least 50% of the surface of this lateral face. The covering material has a modulus of elasticity which is greater than the modulus of elasticity of the rubber-like material forming the block.
The main sipe and/or each secondary sipe has (have) an expanded portion in the depth of the block.
The rigidity of the block is thus improved. So, the combination of a rubber-like material having a low modulus of elasticity with a network of main sipe and secondary sipes is possible, without decreasing so much the durability of this tyre.
Indeed with the expanded portion, we improve the water discharging effect making better the grip on ice-covered ground.
In a variant, each secondary sipe opens on lateral face(s) at one end or both ends.
We improve even more the water discharging effect.
In a variant, the layer of covering material comprises an elastomeric material of which the dynamic shear modulus $G^*$ subjected to a maximum alternating stress of 0.7 MPa, at a frequency of 10 Hz and at a temperature of -10°C, is greater than 200 MPa and preferably greater than 300 MPa.
In other variant, the covering material comprises an assembly of fibres.

BRIEF DESCRIPTION OF THE DRAWINGS

Other features and advantages of the invention will emerge from the following description, given by way of nonlimiting example, with reference to the attached drawings in which:

- **Figure 1** schematically depicts a part of a tread band according to the state of the art;
- **Figure 2** schematically depicts a block of the tread band of **Figure 1;**
- **Figure 3** schematically depicts a block of the tread band of **Figure 1** according to a first embodiment of the invention;
- **Figure 4** schematically depicts a block of the tread band of **Figure 1** according to a second embodiment of the invention.

In the description that follows, elements that are substantially identical or similar will be denoted by identical references.

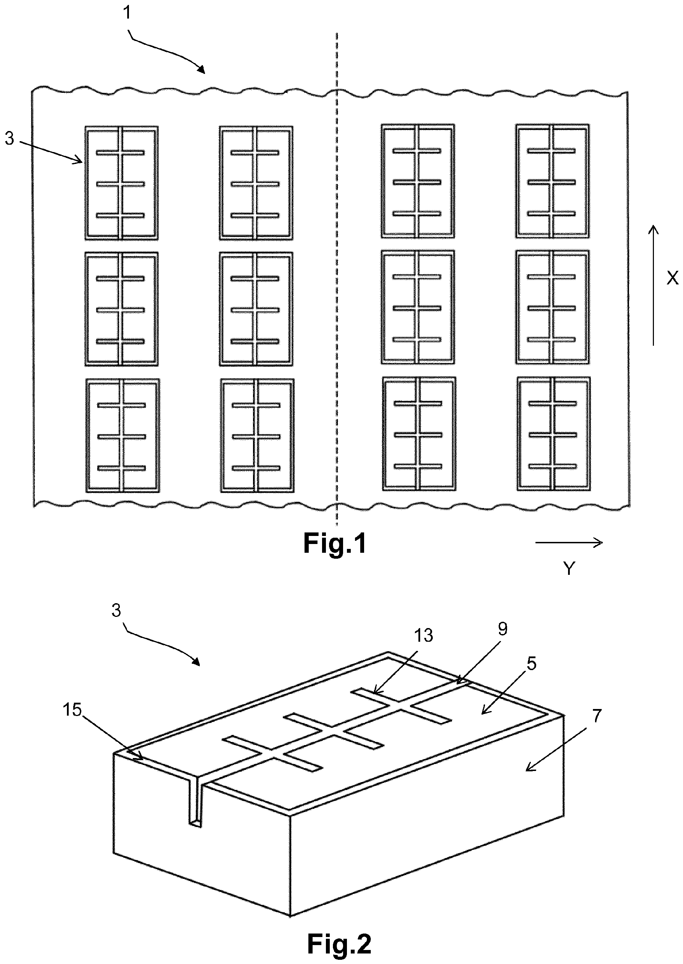

**Figure 1** depicts a tread band 1 made of rubber-like material for a tyre. The tread band 1 comprises two sides and a centre, said tread band having a plurality of blocks 3. Each block has here a rectangular shape.

**Figure 2, Figure 3,** and **Figure 4** depict more precisely a block 3. The block 3 has a contact face 5 designed to come into contact with the ground when the tyre travels and a plurality of lateral faces 7. On the contact face 5, the block comprises a main sipe 9 extending along a main direction, which is here a circumferential direction X. Indeed, the main sipe 9 opens here on lateral face(s) 7 at one end or both ends and the block 3 comprises a plurality of secondary sipes 13 perpendicular to the main sipe 9.

Each lateral face 7 of the block 3 is covered by a layer 15 of the covering material over at least 50% of the surface of this lateral face 7. In the embodiment of **figure 2,** for each lateral face 7 all the surface is covered by the layer 15. The covering material has a modulus of elasticity which is greater than the modulus of elasticity of the rubber-like material forming the block 3.

More particularly, the covering material comprises an elastomeric material of which the dynamic shear modulus G* subjected to a maximum alternating stress of 0.7 MPa, at a frequency of 10 Hz and at a temperature of -10°C, is greater than 200 MPa and preferably greater than 300 MPa. In the present document, the terms "modulus of elasticity G'" and "modulus of viscosity G''" denote the dynamic properties well known to the person skilled in the art. Said properties are measured on a Metravib VA4000 viscoanalyser on test specimens moulded from raw compositions. Test specimens such as those described in the ASTM D 5992-96 standard (version published September 2006, initially approved in 1996) in the figure X2.1 (circular embodiment) are used. The diameter of the test specimen is 10 mm (thus it has a circular section of 78.5 mm$^2$), the thickness of each of the portions of rubber-like composition is 2 mm, which provides a "diameter to thickness" ratio of 5 (in contrast to the ISO 2856 standard, cited in the ASTM standard, paragraph X2.4 which recommends a d/t value of 2). The response of a test specimen of a vulcanized rubber-like composition subjected to simple alternating sinusoidal shear stress, at a frequency of 10 Hz, is recorded. The test specimen is subjected to sinusoidal shear stress at 10 Hz, at controlled stress (0.7 MPa) symmetrically around its position of equilibrium. The measurement is carried out during a temperature ramp increasing by 1.5°C per minute, from a temperature Tmin lower than the glass transition temperature (Tg) of the material, up to a temperature Tmax which may correspond to the rubber plateau of the material. Before starting the scanning, the test specimen is stabilized at the temperature Tmin for 20 minutes to reach a uniform temperature within the test specimen. The result used is the dynamic shear modulus of elasticity (G') and the shear modulus of viscosity (G") at the selected temperatures (in this case 0°, 5° and 20°C). The "complex modulus" G* is defined as the absolute value of the complex sum of the modulus of elasticity G' and the modulus of viscosity G":

$$G^* = \sqrt{(G'^2 + G''^2)} \; .$$

In a variant, the elastomeric material of the covering layer comprises a composition based on at least one diene elastomer which is very highly laden with sulphur, such as ebonite.

In a variant, the covering material comprises an assembly of fibers, for example a three-dimensional assembly of fibres forming a felt. The fibres of said felt may be selected from the group of textile fibres and mineral fibres and a mixture thereof. It is also noteworthy that the fibres of said felt may be selected from textile fibres of natural origin, for example from the group of silk, cotton, bamboo, cellulose, wool fibres and mixtures thereof.

In a further variant, the elastomeric material of the covering layer comprises a composition based on at least one thermoplastic polymer, such as polyethylene terephthalate (PET). Such a polymer may have a Young's modulus of more than 1 GPa.

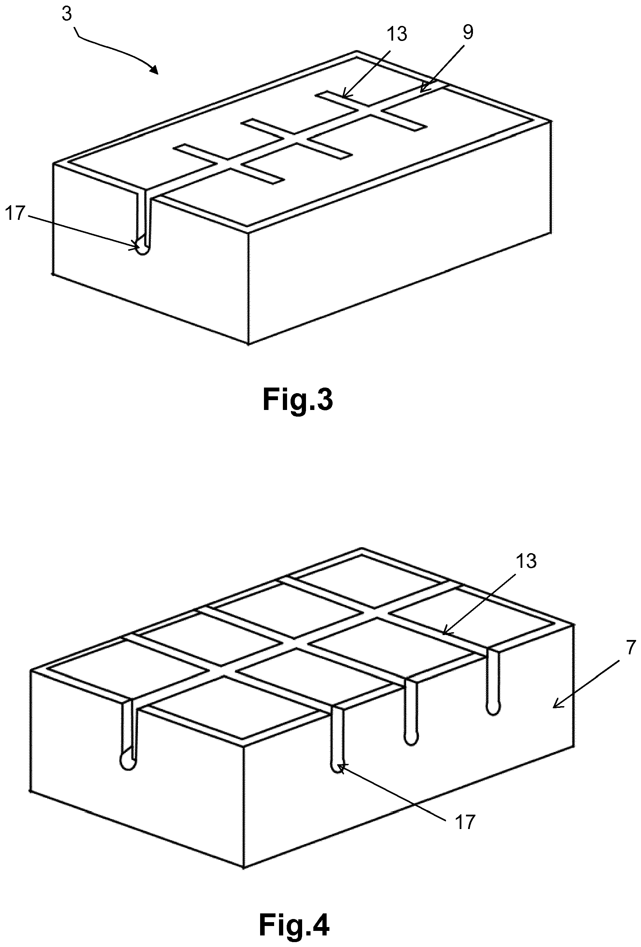

In **Figure 3** the main sipe 9 has here an expanded portion 17 in the depth of the block 3.

**Figure 4** depicts an embodiment in which the secondary sipes 13 open on lateral faces 7 at both ends. Indeed, the secondary sipes have also here and expanded portion 17 in the depth of the block 3.

The invention is not restricted to the examples described and depicted and various modifications can be made thereto without departing from the scope of the claims.

In a variant, the main direction of the main sipe 9 is a transversal direction Y perpendicular to the circumferential direction X.

In other variant, the main direction of the main sipe 9 is oblique.

## Claims

1. Tread band made of rubber-like material for a tyre, said tread band (1) comprising a plurality of blocks (3), each block (3) having a contact face (5) designed to come into contact with the ground when the tyre travels and a plurality of lateral faces (7), each block (3) comprising a main sipe (9) extending along a main direction, each block (3) comprising a plurality of secondary sipes (13) perpendicular to the main sipe (9), wherein each lateral face (7) of the block (3) is covered by a layer (15) of covering material over at least 50% of the surface of this lateral face (7) and wherein the covering material has a modulus of elasticity which is greater than the modulus of elasticity of the rubber-like material forming the block (3) and **characterized in that** the main sipe (9) and/or each secondary sipe (13) has (have) an expanded portion (17) in the depth of the block (3).

2. Tread band according to claim 1, **characterized in that** each secondary sipe (13) opens on lateral face(s) (7) at one end or both ends.

3. Tread band according to any one of claims 1 to 2, **characterized in that** the layer (15) of covering material comprises an elastomeric material of which the dynamic shear modulus G* subjected to a maximum alternating stress of 0.7 MPa, at a frequency of 10 Hz and at a temperature of -10°C, is greater than 200 MPa and preferably greater than 300 MPa.

4. Tread band according to any one of claims 1 to 3, **characterized in that** the covering material comprises an assembly of fibres.

## Patentansprüche

1. Lauffläche aus kautschukartigem Material für einen Reifen, wobei die Lauffläche (1) mehrere Blöcke (3) aufweist, wobei jeder Block (3) eine Kontaktfläche (5) aufweist, die ausgelegt ist, um mit dem Boden in Kontakt zu kommen, wenn der Reifen rollt, und mehrere Seitenflächen (7) aufweist, wobei jeder Block (3) eine Hauptlamelle (9) aufweist, die sich entlang einer Hauptrichtung erstreckt, wobei jeder Block (3) mehrere Sekundärlamellen (13) senkrecht zur Hauptlamelle (9) aufweist, wobei jede Seitenfläche (7) des Blocks (3) auf mindestens 50 % der Oberfläche dieser Seitenfläche (7) mit einer Schicht (15) aus Beschichtungsmaterial bedeckt ist, und wobei das Beschichtungsmaterial einen Elastizitätsmodul aufweist, der größer ist als der Elastizitätsmodul des kautschukartigen Materials, das den Block (3) bildet, und **dadurch gekennzeichnet ist, dass** die Hauptlamelle (9) und/oder jede Sekundärlamelle (13) einen vergrößerten Abschnitt (17) in der Tiefe des Blocks (3) aufweist.

2. Lauffläche nach Anspruch 1, **dadurch gekennzeichnet, dass** jede Sekundärlamelle (13) sich auf den Seitenflächen (7) an einem Ende oder an beiden Enden öffnet.

3. Lauffläche nach einem der Ansprüche 1 bis 2, **dadurch gekennzeichnet, dass** die Schicht (15) aus Beschichtungsmaterial ein elastomeres Material umfasst, dessen dynamischer Schermodul G*, wenn einer maximalen Wechselbeanspruchung von 0,7 MPa ausgesetzt, bei einer Frequenz von 10 Hz und einer Temperatur von -10 °C größer als 200 MPa und vorzugsweise größer als 300 MPa ist.

4. Lauffläche nach einem der Ansprüche 1 bis 3, **dadurch gekennzeichnet, dass** das Beschichtungsmaterial aus einem Faserverbund besteht.

## Revendications

1. Bande de roulement réalisée en un matériau de type caoutchouc pour un pneu, ladite bande de roulement (1) comprenant une pluralité de blocs (3), chaque bloc (3) ayant une face de contact (5) destinée à venir en contact avec le sol lorsque le pneu roule et une pluralité de faces latérales (7), chaque bloc (3) comprenant une lamelle principale (9) s'étendant le long d'une direction principale, chaque bloc (3) comprenant une pluralité de lamelles secondaires (13) perpendiculaires à la lamelle principale (9), dans laquelle
chaque face latérale (7) du bloc (3) est recouverte d'une couche (15) de matériau de revêtement sur au moins 50 % de la surface de cette face latérale (7) et dans laquelle
le matériau de revêtement a un module d'élasticité qui est supérieur au module d'élasticité du matériau de type caoutchouc formant le bloc (3) et **caractérisée en ce que** la lamelle principale (9) et/ou chaque lamelle secondaire (13) a (ont) une partie expansée (17) dans la profondeur du bloc (3).

2. Bande de roulement selon la revendication 1, **caractérisée en ce que** chaque lamelle secondaire (13) s'ouvre sur une/des face(s) latérale(s) (7) à une extrémité ou aux deux extrémités.

3. Bande de roulement selon l'une quelconque des revendications 1 à 2, **caractérisée en ce que** la couche (15) de matériau de revêtement comprend un matériau élastomère dont le module de cisaillement dynamique G* soumis à une contrainte alternée maximale de 0,7 MPa, à une fréquence de 10 Hz et à une température de -10 °C, est supérieur à 200 MPa et de préférence supérieur à 300 MPa.

**4.** Bande de roulement selon l'une quelconque des revendications 1 à 3, **caractérisée en ce que** le matériau de revêtement comprend un ensemble de fibres.

**Fig.1**

**Fig.2**

**Fig.3**

**Fig.4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009078654 A
- WO 2013092846 A1
- JP 2005193770 A
- WO 2013092688 A1